# EUROPÄISCHE PATENTANMELDUNG

(11) **EP 4 782 844 A1**
(43) Veröffentlichungstag der Anmeldung: **29.07.2026**
(21) Anmeldenummer: 26150744.6
(22) Anmeldetag: 08.01.2026
(51) Int. Cl.: G01P 15/13, G01P 21/00, G01C 25/00, G01C 19/5776, G01D 18/00

(54) **SELBSTTEST EINES INERTIALSENSORS**

(30) Priorität: 22.01.2025 DE 102025102130
(71) Anmelder: Deutsches Zentrum für Luft- und Raumfahrt e.V., 53227 Bonn (DE)
(72) Erfinder: Borges Farconi, Leonardo, 28209 Bremen (DE)
(74) Vertreter: Rösler Rasch van der Heide & Partner

(57) **Zusammenfassung**

Die Erfindung betrifft eine Messvorrichtung mit einem inertialen Feedback-Sensor (1) und mit einer Verifikationseinheit (3) zur Feststellung eines fehlerhaften Sensorausgangssignals (S) des Feedback-Sensors (1), der ein Sensorelement (5) und ein Rückstellelement (7) aufweist, wobei die Verifikationseinheit (3) dazu ausgeführt ist, ein auf das Rückstellelement (7) wirkendes dynamisches Testsignal (T) mit einem, eine Vielzahl verschiedener Frequenzen umfassenden, Frequenz-Spektrum zu erzeugen, und auf Basis des auf dem Messsignal basierenden Sensorausgangssignals (S) und auf Basis des Testsignals (T) ein dynamisches Übertragungsverhalten des Feedback-Sensors (1) von einer physikalischen Größe auf das Sensorausgangssignal (S) zu ermitteln und das ermittelte Übertragungsverhalten mit einem gespeicherten Referenzverhalten zu vergleichen, sowie aus dem Vergleich zu bestimmen, ob ein fehlerhaftes Sensorausgangssignal (S) der Messvorrichtung vorliegt.

## Beschreibung

Die Erfindung betrifft eine Messvorrichtung mit einem inertialen Feedback-Sensor und mit einer Verifikationseinheit zur Feststellung eines fehlerhaften Sensorausgangssignals des Feedback-Sensors, sowie ein Verfahren zum Ausführen eines Selbsttests einer Messvorrichtung mit einem inertialen Feedback-Sensor und mit einer Verifikationseinheit zur Feststellung eines fehlerhaften Sensorausgangssignals des Feedback-Sensors.

Die folgenden Informationen ergeben sich aus fachmännischen Überlegungen, anstatt sich notwendigerweise aus einem bestimmten Dokument des Stands der Technik zu ergeben: Inertiale Messeinheiten (sogenannte IMUs, engl. für "inertial measurement units") dienen dazu, aktuelle kinematische Größen in einem Referenzkoordinatensystem zu erfassen. Größtenteils mechanisch ausgeführt nutzen sie bekannte Effekte, wie den Zusammenhang zwischen Kraft und beschleunigter Masse, die Lagewinkelstabilität von rotierenden Massen (Kreiselstabilität) und Ähnliches, um weiterverarbeitbare Sensorsignale von vorherrschenden kinematischen Größen zu ermitteln. Ein häufig essenzieller Bestandteil einer inertialen Messeinheit sind beispielsweise Kreiselinstrumente. Solche Kreiselinstrumente dienen dazu, die Orientierung eines Referenzkoordinatensystems in Form von Lagewinkeln insbesondere gegenüber der Erde ermitteln zu können. Der dabei ausgenutzte Effekt ist die Stabilität einer rotierenden Masse gegenüber Lagewinkeländerungen. Wird beispielsweise eine kardanisch aufgehängte schnell rotierende Masse in einem Gehäuse an einen bewegten Körper angeordnet, wird bei einer Rotationsbewegung des Körpers und damit des Gehäuses das Gehäuse sozusagen um die rotierende Masse herum rotiert, während die jeweilige Achse der rotierenden Masse ihre Ausrichtung beibehält. Aus dieser relativen Orientierungsänderung zwischen rotierender Masse und Gehäuse kann somit eine Orientierungsänderung in Form von differenziellen Winkeln ermittelt werden. Auch Beschleunigungssensoren sind typische Elemente einer inertialen Messvorrichtung, bei welchen die Trägheit der Masse ausgenutzt wird, um eine aktuell auf die Messvorrichtung wirkende Beschleunigung messen zu können.

Unterschiedliche Ansätze im Stand der Technik befassen sich mit einer SelbsttestFunktion einer solchen inertialen Messvorrichtung, kurz "IMU". Einige dieser Ansätze fokussieren speziell auf kapazitive Sensoren, wie die DE 4133426 A1, die eine Schaltungsanordnung zur Auswertung und zum Test eines kapazitiven Sensors betrifft, insbesondere zur Messung einer Beschleunigung, der eine auslenkbare Mittelelektrode zwischen ortsfesten Messelektroden aufweist, mit einem Messmodus und einem Testmodus, wobei im Messmodus die Differenz von mit der Kapazitätsmessbrücke verbundenen Messkapazitäten, die von der Mittelelektrode und jeweils einer der Messelektroden gebildet sind, ein Signal für die Auslenkung der Mittelelektrode bildet, und wobei im Testmodus eine mit der Kapazitätsmessbrücke verbundene Referenzkapazität eine der Messkapazitäten ersetzt und eine Potentialdifferenz zwischen Mittelelektrode und Messelektrode der ersetzten Messkapazität anlegbar ist, wobei die dadurch verursachte Auslenkung der Mittelelektrode an der anderen Messkapazität messbar ist.

Auch die US 5103667 A und die US 5391283 A fokussieren speziell auf kapazitive Sensoren, während die DE 19845185 A1 und die DE 19845185 A1 sich mit Vibrationssensoren beschäftigen.

Darüber hinaus ist es erforderlich, dass ein Betätigungsgerät in der Nähe des zu testenden Sensors platziert wird, damit der Sensor getestet werden kann. Dies gilt für die DE 19845185 A1 und die US 5391283 A. Im Bezug auf die Art der zu identifizierenden Fehler adressieren verschiedene Dokumente aus dem Stand der Technik die dynamische Identifizierung der Sensoren, aber in der Regel mit begrenzter Fähigkeit: Die DE 4133426 A1, die US 5377523 A und die US 2008028823 A1 erwähnen nur einen Test bei einer spezifischen Frequenz, der die Parameter des dynamischen Verhaltens begrenzt, das beobachtet werden kann. DE 19845185 A1 empfiehlt, den Sensor bei verschiedenen Frequenzen zu testen, aber es werden keine Informationen darüber angegeben, wie die Daten zur Bewertung des Sensorzusatnds verwendet werden können. In der US 5103667 A ist der Test, der an einem kapazitiven Beschleunigungssensor durchgeführt wird, in der Lage, die Dämpfungseigenschaften des Sensors zu messen. Wie damit eine Sensorintegrität bewertet werden könnte, bleibt hierin jedoch offen.

Aufgabe der Erfindung ist es, einen Betrieb eines inertialen Feedback-Sensors zuverlässiger zu gestalten, indem eine Selbsttestfunktion verbessert wird.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft eine Messvorrichtung mit einem inertialen Feedback-Sensor und mit einer Verifikationseinheit zur Feststellung eines fehlerhaften Sensorausgangssignals des Feedback-Sensors, wobei der Feedback-Sensor ein Sensorelement aufweist und ein Rückstellelement aufweist, welches dazu ausgeführt ist, das Sensorelement entgegen einer vom Sensorelement erfahrenen Einwirkung einer zu messenden physikalischen Größe in einen Gleichgewichtszustand zu drängen, und wobei das Rückstellelement eine Ausgangsschnittstelle zur Ausgabe eines Messsignals aufweist, wobei die Verifikationseinheit dazu ausgeführt ist, auf ein Auslösesignal hin ein auf das Rückstellelement wirkendes dynamisches Testsignal mit einem, eine Vielzahl verschiedener Frequenzen umfassenden, Frequenz-Spektrum zu erzeugen, und auf Basis des auf dem Messsignal basierenden Sensorausgangssignals und auf Basis des Testsignals ein dynamisches Übertragungsverhalten des Feedback-Sensors von einer physikalischen Größe auf das Sensorausgangssignal zu ermitteln und das ermittelte Übertragungsverhalten mit einem gespeicherten Referenzverhalten zu vergleichen, sowie aus dem Vergleich zu bestimmen, ob ein fehlerhaftes Sensorausgangssignal der Messvorrichtung vorliegt.

Zur Quantifizierung der physikalischen Größe, welche es zu messen gilt, ist eine Wechselwirkung mit dem Feedback-Sensor notwendig. Zu diesem Zweck wird im Feedback-Sensor ein Sensorelement vorgesehen, auf welches die zu messende physikalische Größe einwirkt. Der Sensorelement wird dadurch tendenziell in eine Auslenkung gedrängt, die je nach Bauart des Sensorelements elektrisch, mechanisch, magnetisch, etc. sein kann. Durch ein Rückstellelement wird dieser Auslenkung entgegengewirkt, indem das Sensorelement in dem Freiheitsgrad, der durch die zu messende physikalische Größe beeinflusst wird, gegen den Einfluss der physikalischen Größe zurückgestellt wird in Richtung eines Gleichgewichtszustand des Sensorelements. Beispielsweise ist die Auslenkung mechanisch durch die zu messende physikalische Größe verursacht, d. h. das Sensorelement wird durch die zu messende physikalische Größe tendenziell um einen Weg ausgelenkt, während das Rückstellelement eine Gegenkraft aufbringt, um die Auslenkung dieses Weges zu verhindern, um das Sensorelement an einem beispielsweise örtlichen Gleichgewichtspunkt verbleiben zu lassen. Wird die Gegenkraft gemessen, so kann beispielsweise auf eine Beschleunigung geschlossen werden. Da es sich somit bei der Gegenkraft um eine Stellgröße handelt, die aufgrund einer Rückführung aufgebracht wird, wird eine solche Sensorart Feedback-Sensor genannt.

Das Rückstellelement kann ein passiv wirkendes Teil sein, wie zum Beispiel eine mechanische Feder, es kann jedoch auch ein ansteuerbarer Aktor sein. Die quantifizierte Aktion am Rückstellelement im Sinne einer Reaktion auf die Wirkung der physikalischen Größe dient als Grundlage zur Erzeugung des Sensorausgangssignals, welches auf dem Messsignal des Rückstellelements basiert. Wird in diese Feedbackschleife mit Wirkung auf das Rückstellelement künstlich ein Testsignal eingebracht, so wird das vom Sensorelement erzeugte Messsignal mit dem Testsignal überlagert, und das Testsignal wirkt auf das Rückstellelement, als wäre es vom Sensorelement aufgrund einer äußeren physikalischen Einwirkung entstanden, die es zu messen gilt. Dementsprechend wird vom Rückstellelement in der geschlossenen Schleife ein entgegen gerichtetes Signal erzeugt werden.

Die Verifikationseinheit kann in einem eigenen Computersystem realisiert sein, oder in einer alternativen Ausführungsform integral mit dem Feedback-Sensor in einer gemeinsamen Einheit implementiert werden. Wird nun durch die Verifikationseinheit das erzeugte Testsignal mit dem Sensorausgangssignal verglichen, welches auf dem Messsignal und im Gegensatz zum regulären Betrieb des Feedback-Sensors ohne Ausführung eines solchen Selbsttests in diesem Fall dem Testsignal basiert, so kann ein Übertragungsverhalten einer (in diesem Fall tatsächlich nicht auftretenden aber nachgebildeten) einwirkenden physikalischen Größe auf das Sensorausgangssignal übermittelt werden. Verhält sich der Feedback-Sensor in diesem Verhalten linear, so kann jeder vorliegenden Frequenz einer physikalischen Größe eine Amplitudenverstärkung und ein Phasenverzug auf das Sensorausgangssignal zugeordnet werden. Dementsprechend können Methoden der Systemidentifikation im Zeitbereich und insbesondere im Frequenzbereich herangezogen werden, um das Übertragungsverhalten des Feedback-Sensors basierend auf dem Testsignal zu ermitteln. Dieses tatsächlich vorliegende Übertragungsverhalten wird somit vorteilhaft durch die Verifikationseinheit mit einem Referenzverhalten verglichen, um Störungen und unerwünschte Verhalten identifizieren zu können, d. h. um sogenannte "Soft Errors" des Feedback-Sensors ermitteln zu können.

Diese stellen insbesondere eine Kategorie von Fehlerfällen dar, bei denen der Feedback-Sensor weiterhin Daten in der gewünschten Datenrate liefert, welche unter Umständen für den menschlichen Betrachter auch plausibel erscheinen können, jedoch vom realen Wert unzulässig weit verschoben sein können, und somit nur mit spezieller Messtechnik anderweitig identifizierbar wären. Durch das Aufbringen eines dynamischen Testsignals mit Wirkung auf das Rückstellelement jedoch kann der Feedback-Sensor selbst genutzt werden, um seine korrekte Funktion zu verifizieren.

Kennzahlen können ermittelt werden, welche den Vergleich des tatsächlichen Übertragungsverhaltens mit dem Referenzverhalten erlauben. Da insbesondere das Testsignal dynamisch ist, und ein reiches Spektrum aufweist, und ausreichend viele Frequenzen im Feedback-Sensor zur Durchführung einer zuverlässigen SystemIdentifikation umfasst, können Kennzahlen wie frequenzabhängige Amplitudenverstärkung und frequenzabhängiger Phasenverzug ermittelt werden. Werden diese Kennzahlen mit entsprechenden vorgegebenen Grenzwerten verglichen, kann eine eindeutige Aussage über die korrekte Funktionsweise des Feedback-Sensors getätigt werden, insbesondere "einwandfreie Funktion" oder "fehlerhafte Funktion".

Dieser Selbsttest ist somit vorteilhaft in der Lage, einen oder mehrere Sensoren einer inertialen Messeinheit und/oder eine Auswerteelektronik der inertialen Messvorrichtung selbstständig auf einwandfreie Funktion zu überprüfen. Die einwandfreie Funktion einer gesamten inertialen Messeinheit ist häufig essenziell für einen Betrieb einer sicherheitskritischen Flugsteuerung und Navigation eines Luftfahrzeugs, zumindest jedoch für eine ordnungsgemäße Durchführung einer Mission.

Fehlerfälle, die die einwandfreie Funktion beeinträchtigen, umfassen nicht nur ein vollständiges Versagen der Ausgabe einwandfreier und zuverlässiger Messdaten, sondern auch Fehler, die Änderungen in der Dynamik der inertialen Messvorrichtung bezüglich der Übertragung eines realen Zustands auf das ausgegebene Sensorausgangssignal nach sich ziehen. Letztere Art von Fehlern werden konventionell unter Umständen ohne komplexe technische Tests nicht unmittelbar wahrgenommen, und erfordern zu ihrem Nachweis unter Umständen eine mechanische Zerlegung der inertialen Messvorrichtung.

Durch den vorgeschlagenen Selbsttest kann eine inertiale Messvorrichtung zuverlässige Informationen über ihren Zustand liefern, um eine Aussage über das Vorliegen der einwandfreien Funktion zu erhalten. Eine inertiale Messvorrichtung wird damit wiederverwendbar in Systemen, die traditionell nicht wiederverwendbar sind oder nicht wiederverwendet wurden, wie zum Beispiel Booster-Systeme von Trägerraketen, oder regulär zur Erde zurückkehrende Raumfähren.

Gemäß einer vorteilhaften Ausführungsform umfasst das dynamische Testsignal ein sinusförmiges Signal mit einer sich über die Zeit ändernden Frequenz.

Das Testsignal, welches als künstliche Störung in der geschlossenen Schleife des Feedback-Sensors wirkt, wird nach dieser Ausführungsform durchgehend sinusförmig ausgebildet, während sich die Frequenz der sinusförmigen Schwingung über die Zeit ändert, insbesondere erhöht. Der Vorteil einer solchen sinusförmigen Ausbildung des Testsignals liegt in einer einfachen Erzeugung des Signals sowie in der vollständigen Abdeckung eines breiten Spektrums von einer gewünschten niedrigsten bis zu einer gewünschten höchsten Frequenz. Weist das Testsignal eine Folge von Frequenzen auf, die zu diskreten Zeitpunkten gewechselt werden, wird das Testsignal auch "Sinus Sweep" genannt; werden die Frequenzen kontinuierlich über die Zeit geändert, kann von einem "Chirp Signal" gesprochen werden. Alternativen zum sinusförmigen Verlauf des Testsignals sind aneinandergereihte Rechteckimpulse unterschiedlicher Dauern, eine zufällige oder pseudozufällige Anregung, oder Weiteres; entscheidend bei der Anregung ist ein möglichst reiches Spektrum der Anregung mit einer Vielzahl unterschiedlicher Frequenzen im Testsignal, um ein möglichst vollständiges dynamisches Verhalten des Feedback-Sensors innerhalb eines gewünschten Frequenzbereiches identifizieren zu können.

Gemäß einer weiteren vorteilhaften Ausführungsform weist das dynamische Testsignal eine volle Periodenschwingung eines ersten sinusförmigen Signals mit einer ersten konstanten Frequenz auf, wobei sich an das erste sinusförmige Signal ein zweites sinusförmiges Signal mit einer sich über die Zeit ändernden Frequenz anschließt.

Der Vorteil dieser Kombination von sinusförmigen Signalen mit einer ersten sehr niederfrequenten Periode mit einem sich anschließenden Frequenz-Sweep wie oben beschrieben besteht insbesondere darin, dass die erste niederfrequente Periode so langsam gewählt wird, dass sie keinen signifikanten Phasenverzug während der dynamischen Übertragung auf das Sensor-Ausgangssignal nach sich zieht. Dies kann bei der Analyse des Übertragungsverhaltens helfen.

Gemäß einer weiteren vorteilhaften Ausführungsform weist der Feedback-Sensor einen Demodulator, eine Kompensationseinheit, und einen Verstärker auf, und ist dazu ausgeführt, ein, auf eine Einwirkung einer zu messenden physikalischen Größe auf das Sensorelement hin vom Sensorelement erzeugtes, Sensorelementsignal zum Demodulator und weiter zur Kompensationseinheit zu leiten, wobei die Verifikationseinheit dazu ausgeführt ist, das Testsignal auf ein Ausgangssignal der Kompensationseinheit zu addieren, wobei der Feedback-Sensor dazu ausgeführt ist, das Ergebnis der Addition an den Verstärker zu leiten, wobei der Verstärker mit seinem Ausgang mit dem Rückstellelement verbunden ist.

Der Demodulator wandelt das vom Sensorelement erzeugte Signal in ein elektrisches oder digitales Signal um, das zum Beispiel für Berechnungen verwendet werden kann. Die Kompensationseinheit verwendet das demodulierte Signal, um ein Steuersignal zu erzeugen, das das Rückstellelement zwingt, das Sensorelement in eine Nulllage zu bringen. Der Verstärker wandelt das durch die Kompensationseinheit erzeugte Signal in den physikalischen Wert um, den das Rückstellelement benötigt.

Gemäß einer weiteren vorteilhaften Ausführungsform ist die Verifikationseinheit dazu ausgeführt, zu bestimmen, ob ein fehlerhaftes Sensorausgangssignal des Feedback-Sensors vorliegt, indem durch die Verifikationseinheit auf Basis des ermittelten Übertragungsverhaltens zumindest eine Referenzkennzahl gebildet wird, welche mit einem jeweiligen Grenzwert verglichen wird.

Gemäß einer weiteren vorteilhaften Ausführungsform betrifft der Vergleich der jeweiligen Referenzkennzahl mit dem jeweiligen Grenzwert einen Verstärkungsfaktor und/oder einen Verstärkungsfaktor bei einer niedrigsten Frequenz des Testsignals und/oder einen Bias und/oder einen Bias bei einer niedrigsten Frequenz des Testsignals und/oder eine maximale Bias-Abweichung einer Vielzahl von Bias Werten bei verschiedenen Frequenzen relativ zu einem Bias Wert bei einer niedrigsten Frequenz und/oder eine maximale Verstärkungsspanne zwischen berechneten Verstärkungen und/oder die Frequenz bei der ein Abfall von 3dB der Amplitude im Übertragungsverhalten auftritt und/oder einen Phasenverzug beim Abfall von 3dB der Amplitude im Übertragungsverhalten.

Insbesondere der Verstärkungsfaktor sowie der Bias jeweils bei der niedrigsten Frequenz des Testsignals sowie die maximale Bias-Abweichung einer Vielzahl von Bias Werten bei verschiedenen Frequenzen relativ zu einem Bias Wert bei einer niedrigsten Frequenz des Testsignals sind besonders relevant aufgrund der Tatsache, dass diese jeweils proportional oder zumindest korrelierend sind mit einem Skalenfaktor bzw. Bias, insbesondere eines frequenzabhängigen Bias, der durch die Korrektur von Vibrationen am Sensorelement verursacht wird, des Feedback-Sensors, welche allesamt Parameter sind, die direkt die Güte eines Navigationssystems beeinflussen, welches einen solchen Feedback-Sensor verwendet. Die weiteren oben genannten Kennzahlen beeinflussen nicht direkt die Güte des Navigationssystems, repräsentieren jedoch das dynamische Übertragungsverhalten des Feedback-Sensors. Unerwartete Änderungen in diesen Parametern und Kennzahlen repräsentieren mögliche fehlerhafte SensorAusgangssignale, sogenannte "soft failures" oder auch genannt "soft errors", die es zu erkennen und vermeiden gilt.

Gemäß einer weiteren vorteilhaften Ausführungsform ist die Verifikationseinheit dazu ausgeführt, zu prüfen, ob das Auslösesignal während einer nicht-sicherheitskritischen Verwendung der Messvorrichtung erfolgt und bei Feststellung einer sicherheitskritischen Verwendung das Auslösesignal zu verwerfen.

Dementsprechend wird der Selbsttest vorteilhaft nur dann durchgeführt und dementsprechend das Testsignal erzeugt und auf den Feedback-Sensor aufgebracht, wenn die Messvorrichtung aktuell und für den Zeitraum des Aufbringen des Testsignals nicht verwendet wird. Das Auslösesignal kann selbst von der Verifikationseinheit in einer alternativen Ausführungsform erzeugt werden, wenn von der Verifikationseinheit eine Feststellung einer sicherheitskritischen Verwendung nicht erfolgt. Dies kann beispielsweise beim Stillstand eines Flugzeugs auf dem Boden der Fall sein, welches eine solche Messvorrichtung eingebaut hält.

Ein weiterer Aspekt der Erfindung betrifft ein Verfahren zum Ausführen eines Selbsttests einer Messvorrichtung mit einem inertialen Feedback-Sensor und mit einer Verifikationseinheit zur Feststellung eines fehlerhaften Sensorausgangssignals des Feedback-Sensors, wobei ein Feedback-Sensor verwendet wird, der ein Sensorelement aufweist und ein Rückstellelement aufweist, welches das Sensorelement entgegen einer vom Sensorelement erfahrenen Einwirkung einer zu messenden physikalischen Größe in einen Gleichgewichtszustand drängt und eine Ausgangsschnittstelle zur Ausgabe eines Messsignals aufweist, wobei durch die Verifikationseinheit auf ein Auslösesignal hin ein auf das Rückstellelement wirkendes dynamisches Testsignal mit einem, eine Vielzahl verschiedener Frequenzen umfassenden, Frequenz-Spektrum erzeugt wird, und auf Basis des auf dem Messsignal basierenden Sensorausgangssignals und auf Basis des Testsignals ein dynamisches Übertragungsverhalten des Feedback-Sensors von einer physikalischen Größe auf das Sensorausgangssignal ermittelt und das ermittelte Übertragungsverhalten mit einem gespeicherten Referenzverhalten verglichen wird, sowie aus dem Vergleich bestimmt wird, ob ein fehlerhaftes Sensorausgangssignal der Messvorrichtung vorliegt.

Die unter dem ersten Aspekt der Erfindung genannten Ausführungen und Implementierungsvarianten mögen sich auf weitere Verbesserungen und alternative Ausführungen des genannten Verfahrens zum Ausführen eines Selbsttests einer solchen Messvorrichtung erstrecken. Vorteile und bevorzugte Weiterbildungen des vorgeschlagenen Verfahrens ergeben sich durch eine analoge und sinngemäße Übertragung der im Zusammenhang mit der vorgeschlagenen Messvorrichtung vorstehend gemachten Ausführungen.

Gemäß einer weiteren vorteilhaften Ausführungsform ist die Verifikationseinheit dazu ausgeführt, zumindest einen statischen, vorabgespeicherten Grenzwert zu verwenden und zumindest einen weiteren dynamischen Grenzwert basierend auf dem ermittelten Übertragungsverhalten zu ermitteln.

So kann beispielsweise für den Verstärkungsfaktor ein konstanter Grenzwert verwendet werden, während der während des Selbsttests mithilfe des Testsignals ermittelte Verstärkungsfaktor als Grundlage für die aktuelle Ermittlung eines Grenzwert für einen ermittelten Bias dient.

Gemäß einer weiteren vorteilhaften Ausführungsform umfasst das ermittelte Übertragungsverhalten einen ermittelten Verstärkungsfaktor, wobei die Verifikationseinheit dazu ausgeführt ist, mithilfe einer vordefinierten Funktion und dem ermittelten Verstärkungsfaktor als Eingangsgröße der Funktion einen Grenzwert bezüglich zumindest eines der folgenden zu ermitteln: Bias, Bias-Abweichung, maximaler Verstärkungsfaktor, Frequenz eines Abfalls von 3dB der Amplitude im Übertragungsverhalten, Phasenverzug beim Abfall von 3dB der Amplitude im Übertragungsverhalten.

Gemäß einer weiteren vorteilhaften Ausführungsform umfasst das ermittelte Übertragungsverhalten einen ermittelten Bias, wobei die Verifikationseinheit dazu ausgeführt ist, mithilfe einer vordefinierten Funktion und dem ermittelten Bias als Eingangsgröße der Funktion einen Grenzwert bezüglich zumindest eines der folgenden zu ermitteln: Verstärkungsfaktor, Bias-Abweichung, maximaler Verstärkungsfaktor, Frequenz eines Abfalls von 3dB der Amplitude im Übertragungsverhalten, Phasenverzug beim Abfall von 3dB der Amplitude im Übertragungsverhalten.

Ziel der Verifikationseinheit ist es festzustellen, ob ein fehlerhaftes Sensorausgangssignal des Feedback-Sensors vorliegt. Falsch-positive Feststellungen eines fehlerhaften Sensorsignals könnten dann durch die Verifikationseinheit erzeugt werden, wenn sich Umgebungsbedingungen insoweit ändern, dass sich dadurch auch das Übertragungsverhalten des Feedback-Sensors ändert. Eine solche Änderung des Übertragungsverhaltens erfolgt beispielsweise aufgrund von einer Temperaturänderung oder einer Orientierungsänderung relativ zur Erde, und ist objektiv nicht als fehlerhaftes Übertragungsverhalten zu werten, vielmehr ist der Feedback-Sensor dafür auszulegen, in verschiedenen Umgebungsbedingungen zu arbeiten. Zweck der beiden unmittelbar vorhergehend beschriebenen Ausführungsformen ist es, bei der Überprüfung des Feedback-Sensors auf ein fehlerhaftes Sensorausgangssignal aufgrund eines fehlerhaften Übertragungsverhaltens solche Änderungen von Parametern in der Umwelt zu berücksichtigen.

Die jeweilige vordefinierte Funktion wird in der Herstellungsphase der Messvorrichtung entsprechend bestimmt, um Grenzwerte für Kennzahlen festzulegen, die innerhalb gewisser Arbeitsbereiche sinnvolle Grenzwerte darstellen und nicht zu falsch-Positiven in der Fehlererkennung führen.

Ein weiterer Aspekt der Erfindung betrifft ein Verfahren zum Herstellen einer Messvorrichtung mit einem inertialen Feedback-Sensor und mit einer Verifikationseinheit zur Feststellung eines fehlerhaften Sensorausgangssignals des Feedback-Sensors, wobei ein Feedback-Sensor mit einem Sensorelement und mit einem Rückstellelement bereitgestellt wird, welches dazu ausgeführt ist, das Sensorelement entgegen einer vom Sensorelement erfahrenen Einwirkung einer zu messenden physikalischen Größe in einen Gleichgewichtszustand zu drängen, und wobei das Rückstellelement eine Ausgangsschnittstelle zur Ausgabe eines Messsignals aufweist, und wobei die Verifikationseinheit dazu eingerichtet wird, auf ein Auslösesignal hin ein auf das Rückstellelement wirkendes dynamisches Testsignal mit einem, eine Vielzahl verschiedener Frequenzen umfassenden, Frequenz-Spektrum zu erzeugen, und auf Basis des auf dem Messsignal basierenden Sensorausgangssignals und auf Basis des Testsignals ein dynamisches Übertragungsverhalten des Feedback-Sensors von einer physikalischen Größe auf das Sensorausgangssignal zu ermitteln und das ermittelte Übertragungsverhalten mit einem gespeicherten Referenzverhalten zu vergleichen, indem eine Referenzkennzahl gebildet wird, welche mit einem jeweiligen Grenzwert verglichen wird, sowie aus dem Vergleich zu bestimmen, ob ein fehlerhaftes Sensorausgangssignal der Messvorrichtung vorliegt, wobei in der Verifikationseinheit zumindest ein Grenzwert abgespeichert wird und der Grenzwert ermittelt wird, indem unter einer Vielzahl unterschiedlicher Testbedingungen ein jeweiliges Übertragungsverhalten des Feedback-Sensors ermittelt wird und die Übertragungsverhalten statistisch ausgewertet werden.

**In** diesem Verfahren wird zunächst ein Feedback-Sensor mit den genannten Eigenschaften bereitgestellt. Der Kern der weiteren Herstellung in diesem Verfahren betrifft die Verifikationseinheit, für die ein Grenzwert ermittelt und abgespeichert wird, um diesen Grenzwert im späteren Betrieb der Messvorrichtung für einen wie oben und im folgenden beschriebenen Selbsttest verwenden zu können. Die Auslegung des zumindest einen Grenzwerts erfolgt dadurch, dass unter verschiedenen Umweltbedingungen wie beispielsweise verschiedenen Temperaturen oder Orientierungen des Feedback-Sensors relativ zur Erde eine Systemidentifikation insbesondere im Sinne eines solchen Selbsttests mit Testsignal durchgeführt wird und für jede der Umweltbedingungen relevante Daten gespeichert werden, um sie statistisch auswerten zu können. Insbesondere wird hierbei ein Erwartungswert und eine Standardabweichung einer vorgegebenen Wahrscheinlichkeitsverteilung ermittelt und basierend auf diesen ein entsprechender Grenzwert gebildet.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist.

Es zeigen:
Fig. 1: Eine Messvorrichtung gemäß einem Ausführungsbeispiel der Erfindung.
Fig. 2: Ein beispielhaftes Testsignal zum Selbsttest eines Feedback-Sensors gemäß einem Ausführungsbeispiel der Erfindung.
Fig. 3: Ein Verfahren zum Ausführen eines Selbsttests einer Messvorrichtung gemäß einem Ausführungsbeispiel der Erfindung.

Die Darstellungen in den Figuren sind schematisch und nicht maßstäblich.

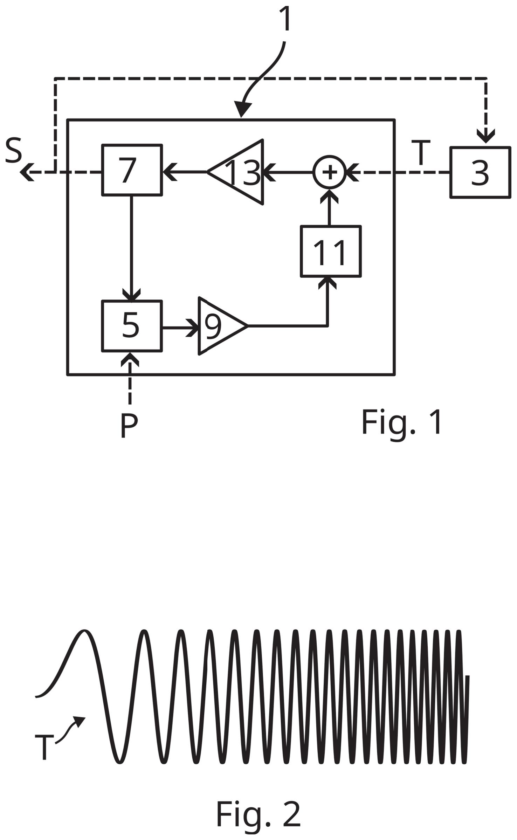

Fig. 1 zeigt eine Messvorrichtung mit einem inertialen Feedback-Sensor 1 und mit einer Verifikationseinheit 3 zur Feststellung in einem Selbsttestverfahren, ob ein Sensorausgangssignal S des Feedback-Sensors 1 fehlerbehaftet ist. Der Feedback-Sensor 1 kann ein Rotationssensor oder ein Beschleunigungssensor sein und weist ein dementsprechendes Sensorelement 5 auf, welches das Prinzip der Massenträgheit und/oder Kreiselstabilität nutzt, um eine inertiale Messungen durchzuführen. Ferner weist der Feedback-Sensor 1 ein Rückstellelement 7 auf, welches dazu ausgeführt ist, das Sensorelement 5 entgegen einer vom Sensorelement 5 erfahrenen Einwirkung einer zu messenden physikalischen Größe wie Rotation bzw. Beschleunigung in einen positionsbezogenen Gleichgewichtszustand zu drängen. Das vom Sensorelement 5 erzeugte Signal wird einem Demodulator 9 zugeführt, dessen Ergebnis wiederum zu einer Kompensationseinheit 11 geleitet wird. Auf das Ergebnis der Kompensationseinheit 11 kann das von der Verifikationseinheit 3 erzeugte Testsignal T bei der Ausführung eines Selbsttests der Messvorrichtung addiert werden. Das Ergebnis der Addition wird einem Verstärker 13 zugeführt, dessen Ergebnis wiederum auf das Rückstellelement 7 wirkt. Die am Rückstellelement 7 erzeugte Stellgröße zum Drängen des Sensorelements 5 in seinen Gleichgewichtszustand dient als Messsignal und in diesem vereinfachten Beispiel der Fig. 1 damit unmittelbar als Sensorausgangssignal S des Feedback-Sensors 1. Mittels des Verhältnisses S/T beispielsweise durch die Berechnung von Kreuzspektren und anderen aus der Systemidentifikation bekannten Methoden können Amplitudenverstärkungen, Phasenverzüge und insbesondere Kennzahlen ermittelt werden, um mittels des Testsignals T als künstliche Störung im Regelkreis unter Berücksichtigung der Wirkung auf das Sensor Ausgangssignal S das dynamische Übertragungsverhalten des Feedback-Sensors 1 ermitteln zu können und direkt mit einem Referenzverhalten oder indirekt über Kennzahlen vergleichen zu können. Zu diesem Zweck erzeugt die Verifikationseinheit 3 das Testsignal T für die Zeitdauer eines Selbsttests der Messvorrichtung.

Fig. 2 zeigt ein beispielhaftes dynamisches Testsignal T in Form eines sinusförmigen Signals mit einer sich über die Zeit ändernden Frequenz. Dieser "frequency sweep" durchläuft Frequenzen von einer niedrigsten bis zu einer höchsten Frequenz kontinuierlich und erfüllt damit das aus der Systemidentifikation häufig gebräuchliche Erfordernis einer "reichen Anregung" der Dynamik des zu untersuchenden Systems, hierbei des Feedback-Sensors 1.

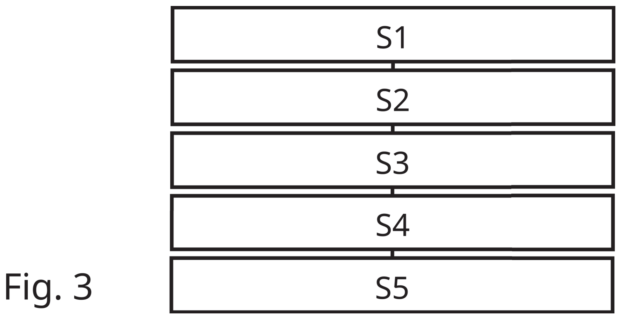

Fig. 3 zeigt ein Verfahren zum Ausführen eines Selbsttests einer Messvorrichtung mit einem inertialen Feedback-Sensor 1 und mit einer Verifikationseinheit 3 zur Feststellung eines fehlerhaften Sensorausgangssignals S des Feedback-Sensors 1, wobei ein Feedback-Sensor 1 verwendet wird S1, der ein Sensorelement 5 aufweist und ein Rückstellelement 7 aufweist, welches das Sensorelement 5 entgegen einer vom Sensorelement 5 erfahrenen Einwirkung einer zu messenden physikalischen Größe in einen Gleichgewichtszustand drängt und eine Ausgangsschnittstelle zur Ausgabe eines Messsignals aufweist, wobei durch die Verifikationseinheit 3 auf ein Auslösesignal hin ein auf das Rückstellelement 7 wirkendes dynamisches Testsignal T mit einem, eine Vielzahl verschiedener Frequenzen umfassenden, Frequenz-Spektrum erzeugt wird S2, und auf Basis des auf dem Messsignal basierenden Sensorausgangssignals S und auf Basis des Testsignals T ein dynamisches Übertragungsverhalten des Feedback-Sensors 1 von einer physikalischen Größe auf das Sensorausgangssignal S ermittelt S3 und das ermittelte Übertragungsverhalten mit einem gespeicherten Referenzverhalten verglichen wird S4, sowie aus dem Vergleich bestimmt wird S5, ob ein fehlerhaftes Sensorausgangssignal S der Messvorrichtung vorliegt.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- 1: Feedback-Sensor
- 3: Verifikationseinheit
- 5: Sensorelement
- 7: Rückstellelement
- 9: Demodulator
- 11: Kompensationseinheit
- 13: Verstärker

## Patentansprüche

1. Messvorrichtung mit einem inertialen Feedback-Sensor (1) und mit einer Verifikationseinheit (3) zur Feststellung eines fehlerhaften Sensorausgangssignals (S) des Feedback-Sensors (1), wobei der Feedback-Sensor (1) ein Sensorelement (5) aufweist und ein Rückstellelement (7) aufweist, welches dazu ausgeführt ist, das Sensorelement (5) entgegen einer vom Sensorelement (5) erfahrenen Einwirkung einer zu messenden physikalischen Größe in einen Gleichgewichtszustand zu drängen, und wobei das Rückstellelement (7) eine Ausgangsschnittstelle zur Ausgabe eines Messsignals aufweist, wobei die Verifikationseinheit (3) dazu ausgeführt ist, auf ein Auslösesignal hin ein auf das Rückstellelement (7) wirkendes dynamisches Testsignal (T) mit einem, eine Vielzahl verschiedener Frequenzen umfassenden, Frequenz-Spektrum zu erzeugen, und auf Basis des auf dem Messsignal basierenden Sensorausgangssignals (S) und auf Basis des Testsignals (T) ein dynamisches Übertragungsverhalten des Feedback-Sensors (1) von einer physikalischen Größe auf das Sensorausgangssignal (S) zu ermitteln und das ermittelte Übertragungsverhalten mit einem gespeicherten Referenzverhalten zu vergleichen, sowie aus dem Vergleich zu bestimmen, ob ein fehlerhaftes Sensorausgangssignal (S) der Messvorrichtung vorliegt.

2. Messvorrichtung nach Anspruch 1,
wobei das dynamische Testsignal (T) ein sinusförmiges Signal mit einer sich über die Zeit ändernden Frequenz umfasst.

3. Messvorrichtung nach Anspruch 2,
wobei das dynamische Testsignal (T) eine volle Periodenschwingung eines ersten sinusförmigen Signals mit einer ersten konstanten Frequenz aufweist, wobei sich an das erste sinusförmige Signal ein zweites sinusförmiges Signal mit einer sich über die Zeit ändernden Frequenz anschließt.

4. Messvorrichtung nach einem der vorhergehenden Ansprüche,
wobei die Verifikationseinheit (3) dazu ausgeführt ist, zu bestimmen, ob ein fehlerhaftes Sensorausgangssignal (S) des Feedback-Sensors (1) vorliegt, indem durch die Verifikationseinheit (3) auf Basis des ermittelten Übertragungsverhaltens zumindest eine Referenzkennzahl gebildet wird, welche mit einem jeweiligen vorabgespeicherten Grenzwert verglichen wird.

5. Messvorrichtung nach Anspruch 4,
wobei der Vergleich der jeweiligen Referenzkennzahl mit dem jeweiligen Grenzwert einen Verstärkungsfaktor und/oder einen Verstärkungsfaktor bei einer niedrigsten Frequenz des Testsignals (T) und/oder einen Bias und/oder einen Bias bei einer niedrigsten Frequenz des Testsignals (T) und/oder eine maximale Bias-Abweichung einer Vielzahl von Bias Werten bei verschiedenen Frequenzen relativ zu einem Bias Wert bei einer niedrigsten Frequenz und/oder eine maximale Verstärkungsspanne zwischen berechneten Verstärkungen und/oder die Frequenz eines Abfalls von 3dB der Amplitude im Übertragungsverhalten und/oder einen Phasenverzug beim Abfall von 3dB der Amplitude im Übertragungsverhalten betrifft.

6. Messvorrichtung nach einem der Ansprüche 4 bis 5,
wobei die Verifikationseinheit (3) dazu ausgeführt ist, zumindest einen statischen vorabgespeicherten Grenzwert zu verwenden und zumindest einen weiteren dynamischen Grenzwert basierend auf dem ermittelten Übertragungsverhalten zu ermitteln.

7. Messvorrichtung nach Anspruch 6,
wobei das ermittelte Übertragungsverhalten einen ermittelten Verstärkungsfaktor umfasst, wobei die Verifikationseinheit (3) dazu ausgeführt ist, mithilfe einer vordefinierten Funktion und dem ermittelten Verstärkungsfaktor als Eingangsgröße der Funktion einen Grenzwert bezüglich zumindest eines der folgenden zu ermitteln: Bias, Bias-Abweichung, maximaler Verstärkungsfaktor, Frequenz eines Abfalls von 3dB der Amplitude im Übertragungsverhalten, Phasenverzug beim Abfall von 3dB der Amplitude im Übertragungsverhalten.

8. Messvorrichtung nach Anspruch 6,
wobei das ermittelte Übertragungsverhalten einen ermittelten Bias umfasst, wobei die Verifikationseinheit (3) dazu ausgeführt ist, mithilfe einer vordefinierten Funktion und dem ermittelten Bias als Eingangsgröße der Funktion einen Grenzwert bezüglich zumindest eines der folgenden zu ermitteln:
Verstärkungsfaktor, Bias-Abweichung, maximaler Verstärkungsfaktor, Frequenz eines Abfalls von 3dB der Amplitude im Übertragungsverhalten, Phasenverzug beim Abfall von 3dB der Amplitude im Übertragungsverhalten.

9. Verfahren zum Ausführen eines Selbsttests einer Messvorrichtung mit einem inertialen Feedback-Sensor (1) und mit einer Verifikationseinheit (3) zur Feststellung eines fehlerhaften Sensorausgangssignals (S) des Feedback-Sensors (1), wobei ein Feedback-Sensor (1) verwendet wird (S1), der ein Sensorelement (5) aufweist und ein Rückstellelement (7) aufweist, welches das Sensorelement (5) entgegen einer vom Sensorelement (5) erfahrenen Einwirkung einer zu messenden physikalischen Größe in einen Gleichgewichtszustand drängt und eine Ausgangsschnittstelle zur Ausgabe eines Messsignals aufweist, wobei durch die Verifikationseinheit (3) auf ein Auslösesignal hin ein auf das Rückstellelement (7) wirkendes dynamisches Testsignal (T) mit einem, eine Vielzahl verschiedener Frequenzen umfassenden, Frequenz-Spektrum erzeugt wird (S2), und auf Basis des auf dem Messsignal basierenden Sensorausgangssignals (S) und auf Basis des Testsignals (T) ein dynamisches Übertragungsverhalten des Feedback-Sensors (1) von einer physikalischen Größe auf das Sensorausgangssignal (S) ermittelt (S3) und das ermittelte Übertragungsverhalten mit einem gespeicherten Referenzverhalten verglichen wird (S4), sowie aus dem Vergleich bestimmt wird (S5), ob ein fehlerhaftes Sensorausgangssignal (S) der Messvorrichtung vorliegt.

10. Verfahren zum Herstellen einer Messvorrichtung mit einem inertialen Feedback-Sensor (1) und mit einer Verifikationseinheit (3) zur Feststellung eines fehlerhaften Sensorausgangssignals (S) des Feedback-Sensors (1), wobei ein Feedback-Sensor (1) mit einem Sensorelement (5) und mit einem Rückstellelement (7) bereitgestellt wird, welches dazu ausgeführt ist, das Sensorelement (5) entgegen einer vom Sensorelement (5) erfahrenen Einwirkung einer zu messenden physikalischen Größe in einen Gleichgewichtszustand zu drängen, und wobei das Rückstellelement (7) eine Ausgangsschnittstelle zur Ausgabe eines Messsignals aufweist, und wobei die Verifikationseinheit (3) dazu eingerichtet wird, auf ein Auslösesignal hin ein auf das Rückstellelement (7) wirkendes dynamisches Testsignal (T) mit einem, eine Vielzahl verschiedener Frequenzen umfassenden, Frequenz-Spektrum zu erzeugen, und auf Basis des auf dem Messsignal basierenden Sensorausgangssignals (S) und auf Basis des Testsignals (T) ein dynamisches Übertragungsverhalten des Feedback-Sensors (1) von einer physikalischen Größe auf das Sensorausgangssignal (S) zu ermitteln und das ermittelte Übertragungsverhalten mit einem gespeicherten Referenzverhalten zu vergleichen, indem eine Referenzkennzahl gebildet wird, welche mit einem jeweiligen Grenzwert verglichen wird, sowie aus dem Vergleich zu bestimmen, ob ein fehlerhaftes Sensorausgangssignal (S) der Messvorrichtung vorliegt, wobei in der Verifikationseinheit (3) zumindest ein Grenzwert abgespeichert wird und der Grenzwert bei der Herstellung der Messvorrichtung ermittelt wird, indem unter einer Vielzahl unterschiedlicher Testbedingungen ein jeweiliges Übertragungsverhalten des Feedback-Sensors (1) ermittelt wird und die Übertragungsverhalten statistisch ausgewertet werden.
